# EUROPEAN PATENT SPECIFICATION

(11) **EP 3 613 970 B1**
(45) Date of publication and mention of the grant of the patent: **14.12.2022**
(21) Application number: 19191132.0
(22) Date of filing: 09.08.2019
(51) Int. Cl.: F02C 7/275, F02C 9/00

(54) **AIRCAFT ENGINE IDLE SUPPRESSOR AND METHOD**
FLUGZEUGTRIEBWERKLEERLAUFDROSSEL UND VERFAHREN
SUPPRESSEUR DE RALENTI DE MOTEUR D'AÉRONEF ET PROCÉDÉ

(30) Priority: 20.08.2018 US 201816105642
(43) Date of publication of application: 26.02.2020
(73) Proprietor: Raytheon Technologies Corporation, Farmington, CT 06032 (US)
(72) Inventor: EPSTEIN, Alan H., Lexington, MA Massachusetts 02421 (US)
(74) Representative: Dehns

(56) References cited:
- US-A1- 2012 014 812
- US-A1- 2017 044 989

## Description

### BACKGROUND

The disclosure relates generally to turbine engines for aircraft and more specifically to optimizing idle operation of such engines for advanced applications.

Relatively high idle speed results in excessive thrust at idle which makes aircraft taxing more difficult and can consume aircraft braking capacity, which in some cases may restrict takeoff capability. The high idle speeds raise the engine exhaust gas temperature (EGT) to the point where for some engines it is the highest EGT the engine experiences. These high temperatures necessitate the use of higher temperature capable, more expensive materials for some exhaust system parts. Furthermore, accommodations made to reduce idle speeds, such as compressor geometry changes, can be detrimental to high power efficiency.

Idle speeds are constrained by several factors. First, compressor and turbine efficiencies are low at idle speeds, far below those at engine design speed. The power available to accelerate the spool is only the turbine power in excess of that required to power the compressor, such excess power is relatively low near idle. Second, fuel must be added to generate excess power. The fuel addition raises the combustor exit air temperature, thus reducing the air density entering the fixed turbine geometry. This increases the back pressure on the compressor before the spool can accelerate so the engine operating point moves up the constant speed line toward the stall line. This loss of stall margin constrains the rate at which fuel can be added and so the rate at which a spool can accelerate. Requirements for acceleration time from idle to full power can thus contribute to the need for a relatively high idle speed.

A prior art engine assembly and method of operating the same having the features of the preamble of claims 1 and 11 is disclosed in US 2017/0044989.

### SUMMARY

An embodiment of an engine assembly according to the invention includes a combustion turbine engine having at least a first compressor spool, a first turbine spool, a first shaft connecting the first compressor spool and the first turbine spool, and a combustor disposed in a working gas flow path between the first compressor spool and the first turbine spool. A first controller is programmed with a surge map, and configured to operate the combustion turbine engine in a range extending between a first suppressed idle mode, a second base idle mode, and a maximum takeoff power rating mode. An idle speed suppressor includes at least one idle assist motor connected to the first shaft of the combustion turbine engine. A second controller is configured to manage operation of the idle speed suppressor relative to the combustion turbine engine during times of minimum power demand, such that operating the idle speed suppressor increases a compressor speed in the first suppressed idle mode relative to a compressor speed in the second base idle mode.

An embodiment of a method of operating an engine assembly according to the invention includes operating a combustion turbine engine having at least a first compressor spool, a first turbine spool, a first shaft connecting the first compressor spool and the first turbine spool, and a combustor disposed in a working gas flow path between the first compressor spool and the first turbine spool. Operation of the combustion turbine engine is performed in part according to a compressor surge map, in a range extending between a first suppressed idle mode, a second base idle mode, and a maximum takeoff power rating mode. In at least the first suppressed idle mode, the combustion turbine engine supplemented with an idle speed suppressor, including at least one idle assist motor connected to the first shaft of the combustion turbine engine. The idle speed suppressor is operated relative to the combustion turbine engine during times of minimum power demand, such that operating the idle speed suppressor increases a compressor speed in the first suppressed idle mode relative to a compressor speed in the second base idle mode without increasing engine thrust.

### BRIEF DESCRIPTION OF THE DRAWINGS

FIG. 1 includes a quarter-sectional view of a typical two-spool turbofan combustion turbine engine, along with several accessories and offtakes relevant to the disclosure.
FIG. 2 shows an example schematic configuration of a combustion turbine engine equipped with idle speed suppression.
FIG. 3 shows a second example schematic configuration of an aircraft engine equipped with a particular embodiment of idle speed suppression to utilize excess energy generated therefrom.
FIG. 4 is a generalized and normalized example compressor map for an engine comparing a conventional startup - idle - takeoff cycle to a similar startup - idle - takeoff cycle when employing an idle speed suppressor.

### DETAILED DESCRIPTION

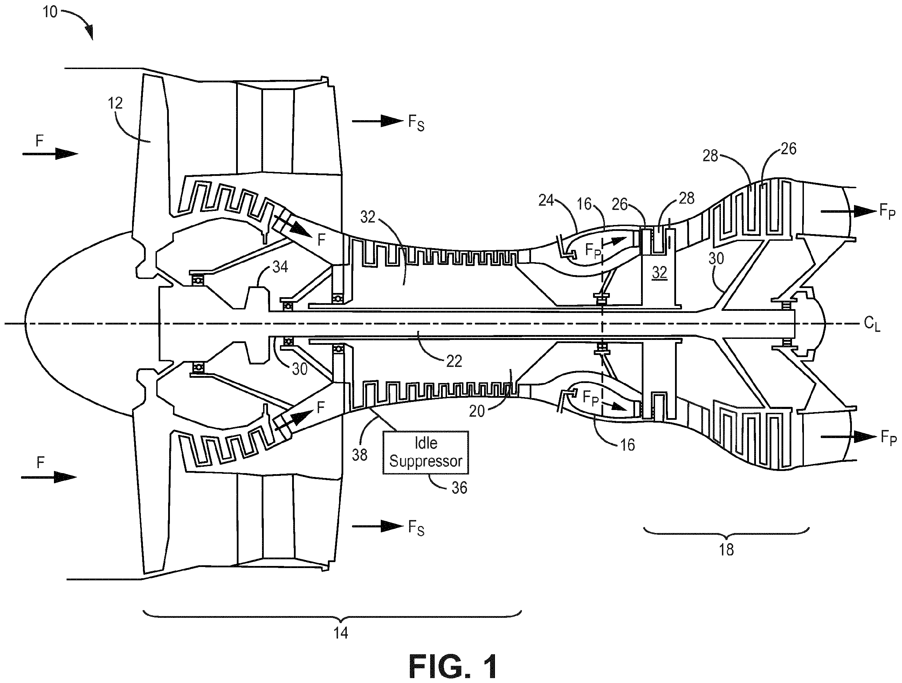

FIG. 1 is a representative, yet non-limiting illustration of gas turbine engine 10. The view in FIG. 1 is a longitudinal quarter-sectional view along engine center line C_{L}. FIG. 1 shows gas turbine engine 10 including fan 12, compressor 14, combustor 16, turbine 18, high-pressure rotor 20, low-pressure rotor 22, and engine casing 24. Turbine 18 includes rotor stages 26 and stator stages 28.

Engine 10 includes low spool 30 including low-pressure rotor 22 with a shaft connecting a low pressure portion of compressor 14 and a low pressure portion of turbine 18, as well as high spool 32 which includes high pressure rotor 20 having a coaxial shaft connecting high pressure portion of compressor 14 to a high pressure portion of turbine 18. FIG. 1 also shows optional speed reducer 34, which can be an epicyclic gearbox or other device that connects and reduces the speed of fan 12 relative to low-speed rotor 30. In embodiments omitting speed reducer 34, it will be appreciated that in most cases fan 12 will also be directly connected to low spool 30 and driven by low-pressure rotor 22. The example shown is a two-spool design but it will be appreciated that the disclosure and claims can readily be adapted to a single spool or, for example, a three-spool engine which would include an intermediate spool as well (not shown).

As illustrated in FIG. 1, fan 12 is positioned along engine center line (C_{L}) at one end of gas turbine engine 10. Compressor 14 is adjacent fan 12 along engine center line C_{L}, followed by combustor 16. Turbine 18 is located adjacent combustor 16, opposite compressor 14. High-pressure rotor 20 and low-pressure rotor 22 are mounted for rotation about engine center line C_{L}. High-pressure rotor 20 connects a high-pressure section of turbine 18 to compressor 14. Low-pressure rotor 22 connects a low-pressure section of turbine 18 to fan 12. Rotor stages 26 and stator stages 28 are arranged throughout turbine 18 in alternating rows. Rotor stages 26 connect to high-pressure rotor 20 and low-pressure rotor 22. Engine casing 24 surrounds turbine engine 10 providing structural support for compressor 14, combustor 16, and turbine 18, as well as containment for cooling air flows, as described below.

In operation, air flow F enters compressor 14 through fan 12 and is split into core flow Fp and bypass flow Fs. Air flow Fp is compressed by the rotation of compressor 14 driven by high-pressure rotor 20. The compressed air from compressor 14 is further divided, with a large portion going to combustor 16, and a smaller portion employed for cooling components exposed to high-temperature combustion gases, such as stator vanes, as described below. Compressed air and fuel are mixed an ignited in combustor 16 to produce high-temperature, high-pressure combustion gases Fp. Combustion core gases Fp exit combustor section 16 into turbine section 18. Stator stages 28 properly align the flow of combustion gases Fp for an efficient attack angle on subsequent rotor stages 26. The flow of combustion gases Fp past rotor stages 26 drives rotation of both high-pressure rotor 20 and low-pressure rotor 22. High-pressure rotor 20 drives at least the high-pressure part of compressor section 14, as noted above, and low-pressure rotor 22 drives at least the low-pressure part of compressor 14 as well as fan 12 to produce thrust Fs from gas turbine engine 10. In this example, engine 10 has two spools, low pressure spool 30 and high pressure spool 32. FIG. 1 also shows fan drive gearbox 34 being driven by low pressure spool 30 to allow for lower and more efficient fan speeds as compared to speed of compressor 14. In this case, tower shaft 38 links engine 10 to idle suppressor 36, which can take several forms as described below.

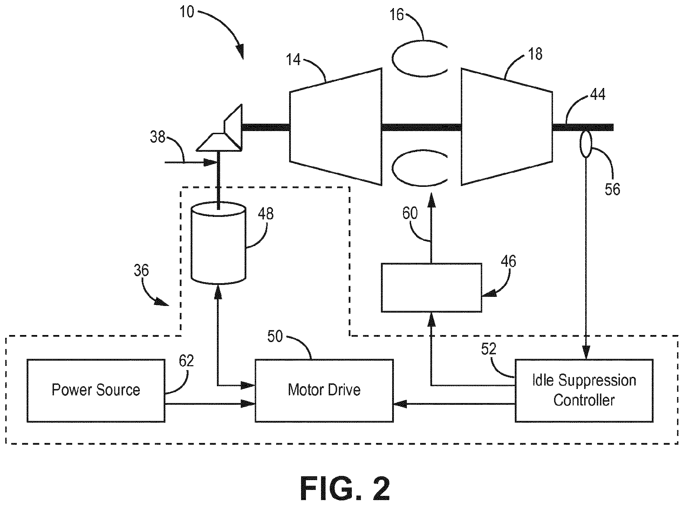

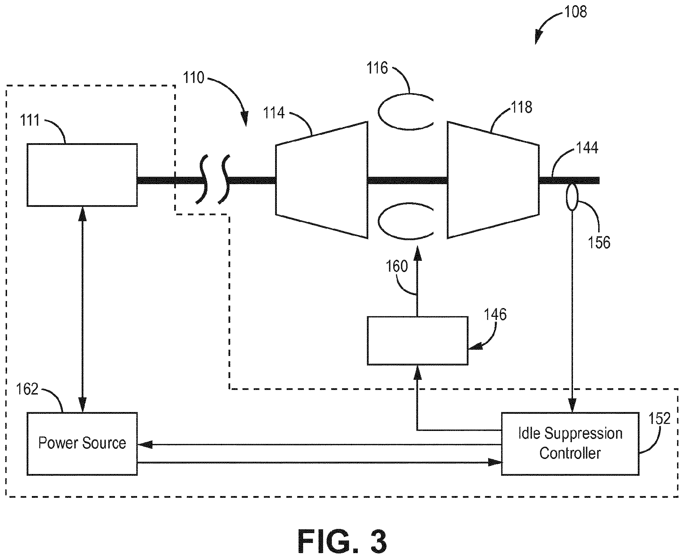

As shown in more detail in FIGS. 2 and 3, idle speed suppressor 36 generally includes at least one idle assist motor and an idle suppression coordinator / controller which controls both the power to the assist motor and data to help regulate the fuel flow rate to the combustor so as to increase acceleration rate while avoiding instability. The assist motor may be a special purpose drive motor, the engine starter, or a starter generator. The motor may be electric, pneumatic, or hydraulic as long as it has provisions by which the torque produced can modulated with sufficient magnitude and frequency response as needed. The controller may be a standalone device or integrated with the engine control computer. The power for the idle assist motor may come from a variety of sources such as stored energy, an auxiliary power unit, and/or another engine.

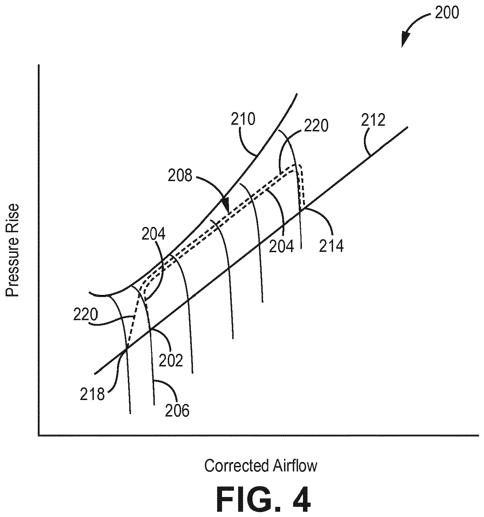

FIG. 2 shows one such non-limiting example of idle suppressor 36 and its relationship to engine 10. In addition to compressor 14, combustor 16, and turbine 18, connected by shaft(s) 44, first controller 46 is programmed with a surge map (normalized example shown in FIG. 4), and configured to operate combustion turbine engine 10 in an operating range extending between a first suppressed idle mode, a second base idle mode, and a maximum takeoff power rating mode, explained more with respect to FIG. 4.

Idle speed suppressor 36 can include at least one idle assist motor 48 connected to a compressor 14 side of combustion turbine engine 10. Where idle assist motor 48 relies on converting stored power into another form (e.g., hydraulic or compressed air), optional motor drive 50 can be provided. Second controller 52 can be configured to manage operation of idle speed suppressor 36 relative to combustion turbine engine 10 during times of minimum power demand, such as idling while taxiing in from or out to the runway. In general, operating idle speed suppressor 36 increases a speed of at least one stage or spool of compressor 14 while in the first, suppressed idle mode, relative to a corresponding compressor speed when engine 10 operates in the second, base idle mode. In certain embodiments, programming of first controller 46 and second controller 52, among others, can be integrated into a single controller unit.

Idle speed suppressor 36 utilizes various inputs and other data to facilitate steady operation with proper feedback in order to maintain suppressed yet also stable idle during at least part of the taxi or other low-power engine mode. In addition to speed sensor 56 which measures rotation of shaft(s) 44, at least one of first controller 46 and second controller 52 can be configured to control fuel flow 60 to engine 10 (specifically combustor 16) that is specific to the idle suppression mode and the surge map (shown in FIG. 4), all while maintaining stability of engine 10 during at least one of idle and acceleration.

As for particular embodiments, idle assist motor 48 can include one or more of a starter / generator, a starter motor, and a dedicated idle assist motor. Though conventional engines are equipped with a dedicated starter or a starter / generator, these are sized to the minimum required to ensure reliable startup and/or power generation in flight. Ordinarily a starter / generator is in generator (power offtake) mode only during operation of the engine due to limitations of component cost, addition to aircraft weight and operability complications. In starter mode, the starter / generator is in power addition mode (assisting with rotating the compressor for example) only during engine lighting and occasionally during in-flight restart. In other words, a starter and a starter / generator only add power to the engine when it is off, and a starter / generator only takes power off of the engine when it is on.

With advances in energy storage, more efficient components and controls, and other technologies, the starter / generator can be enlarged beyond its conventional size to allow for the engine to boost compression (i.e., add power) while the engine is on, so that less fuel is required to maintain the same or less net thrust. This has the effect of suppressing or allowing for lower baseline idle speed as compared to conventional operation.

As such, at least one of the starter and the starter / generator can be operable in an additional idle speed suppression mode while the engine is running, in order to increase a speed of at least one compressor stage during suppressed idle or taxi mode, reducing the load on a turbine driving the at least one compressor stage during suppressed idle or taxi mode.

In certain embodiments, idle assist motor 48 operates at least partially on stored power 62 separate from turbine 18 of combustion turbine engine 10. Stored power 62 can be retained by one or more of a flywheel, a hydraulic reservoir, a battery, and a compressed air tank. In certain embodiments, idle assist motor 48 operates on energy provided by another engine, for example, on operating at higher power levels or an auxiliary power unit (not explicitly shown).

Beyond this, moving to an alternate embodiment shown in FIG. 3, engine assembly 108 can include electric propulsion engine 111 operating in series and/or parallel with combustion turbine engine 110 (similar to engine 10 in FIGS. 1 and 2), which has compressor 114, combustor 116, and turbine 118 connected by shaft(s) 144.

Electric propulsion engine 111 can be configured to operate at least periodically as idle suppressor/idle assist motor, operating in an idle suppression mode during a suppressed idle and/or taxi mode. Second controller 152 can be configured to manage operation of electric propulsion engine 111 as idle speed suppressor relative to combustion turbine engine 110 during times of minimum power demand, such as idling while taxiing in from or out to the runway. As in the example of FIG. 2, operating electric propulsion engine 111 as idle speed suppressor increases a speed of at least one stage or spool of compressor 114 while in the first, suppressed idle mode, relative to a corresponding compressor speed when engine 110 operates in the second, base idle mode. In certain embodiments, programming of first controller 146 and second controller 152, among others, can be integrated into a single controller unit. Speed sensor 156 measures rotation of shaft(s) 144, so that at least one of first controller 146 and second controller 152 can be configured to control fuel flow 160 to engine 110 (specifically combustor 116) that is specific to the idle suppression mode and the surge map (shown in FIG. 4), all while maintaining stability of engine 110 during at least one of idle and acceleration.

FIG. 4 shows a normalized high pressure compressor surge map 200 for operating a combustion turbine engine such as those shown and described herein. Acceleration following the suppressed idle mode is contrasted with acceleration after conventional idle, along a range extending between a first suppressed idle mode, a second base idle mode, and a maximum takeoff power rating mode.

As noted above, in at least the first suppressed idle mode, the combustion turbine engine is supplemented with an idle speed suppressor, including at least one idle assist motor connected to a compressor side of the combustion turbine engine. The idle speed suppressor is operated in conjunction with / relative to the combustion turbine engine during times of minimum power demand, such as during taxi in and out. Operating the idle speed suppressor increases a compressor speed in the first suppressed idle mode relative to a compressor speed in the second base idle mode without increasing engine thrust. This can be done by controlling fuel flow to the engine specific to the idle suppression mode and the surge map while maintaining stability of the engine during the first suppressed idle mode and/or acceleration mode.

Without idle speed suppression, the engine would idle at point 202. As fuel is added to accelerate, the engine follows the dashed conventional acceleration trajectory 204, initially up constant speed line 206. Due to spool inertia, addition of fuel initially only increases exhaust temperatures until the additional energy is able to spin up the spool. Thus fuel addition is controlled carefully to maintain the engine along speed line 208 and kept a sufficient distance from surge line 210 as required to avoid the onset of instability. Near the desired final engine speed 214, fuel is reduced to a level needed for steady operation near steady-state line 212 and desired steady-state operating point 214.

The addition of an idle suppression system permits the engine to idle at lower idle speed, here point 218. Instead acceleration follows trajectory 220. The ability to add additional torque to the spool from the idle assist motor frees the engine from having to initially follow constant speed line 206, so surge line 210 need not be approached as quickly during spool-up. Also the total acceleration time from suppressed idle operating point 218 to point 214 can be as fast that from point 202 to point 214 because of the additional power provided by the motor. It also has the effect of reducing a corresponding turbine output speed operating temperature, and/or exhaust temperature as compared to conventional / base idle mode.

Given an instantaneous rotor speed, the shape of the compressor map stored in a controller, and rotary moment of inertia of the spool, the controller balances the spool power to be supplied from fuel addition with power from the idle assist motor to enable the initial acceleration trajectory to be largely independent of the idle constant speed line. The power provided by the idle assist motor may be a significant fraction of the initial off-idle power. This permits the lower idle speed shown with the same or better acceleration time, while also increasing the stall margin.

It will be recognized that the map has been normalized for illustrative purposes, and thus exact trajectories shown in FIG. 4 are exemplary only. The optimal acceleration profile for any given engine will depend on factors such as the shape of the speed lines, the shape of the surge line and the temperature limits on the engine combustor and turbine. The exemplary compressor map of figure 4 shows an acceleration profile for a single spool engine and for the high pressure (HP) spool of a 2 or 3 spool engine. Other implementations and applications are possible. For one, the low pressure compressor (LP) of a 2 spool engine has a distinctly difference profile than the HP during transients. During acceleration, the LP operating point dips below the steady state op line rather than rising above it. The transient operating lines of Fig. 4 would represent the deceleration transient of the LP. Conceptually, this transient, and the stability concerns it represents, and can limit how fast the engine can decelerate. Thus if the suppressor motor were operated so as to absorb energy (i.e. as a generator if electric, or a low efficiency compressor or pump if fluid) than the idle suppressor could be used to improve engine deceleration rate, should that be desired.

While the invention has been described with reference to an exemplary embodiment(s), it will be understood by those skilled in the art that various changes may be made provided they fall within the scope of the appended claims.

## Claims

1. An engine assembly comprising:
a combustion turbine engine (10; 110) comprising a first compressor spool, a first turbine spool, a first shaft (44; 144) connecting the first compressor spool and the first turbine spool, and a combustor (16; 116) disposed in a working gas flow path between the first compressor spool and the first turbine spool; **characterized by**
a first controller (46; 146) programmed with a surge map, and configured to operate the combustion turbine engine (10; 110) in a range extending between a first suppressed idle mode, a second base idle mode, and a maximum takeoff power rating mode;
an idle speed suppressor (36) including at least one idle assist motor (48) connected to the first shaft (44; 144) of the combustion turbine engine (10; 110); and
a second controller (52; 152) configured to manage operation of the idle speed suppressor (36) relative to the combustion turbine engine (10; 110) during times of minimum power demand, such that operating the idle speed suppressor (36) increases a compressor speed in the first suppressed idle mode relative to a compressor speed in the second base idle mode.

2. The engine assembly of claim 1, wherein at least one of the first controller (46; 146) and the second controller (52; 152) are configured to control fuel flow to the engine (10; 110) specific to the idle suppression mode and the surge map while maintaining stability of the engine (10; 110) during at least one of idle and acceleration.

3. The engine assembly of claim 1 or 2, wherein the idle assist motor (48) comprises at least one of: a starter / generator, a starter motor, and a dedicated idle assist motor.

4. The engine assembly of claim 3, wherein at least one of the starter and the starter / generator is operable in an idle speed suppression mode while the engine (10; 110) is running, in order to increase a speed of the first compressor spool during idle or taxi mode, reducing the load on the first turbine spool driving the first compressor spool during idle or taxi mode.

5. The engine assembly of any preceding claim, wherein the idle assist motor (48) operates at least partially on stored power separate from a turbine (18; 118) of the combustion turbine engine (10; 110).

6. The engine assembly of claim 5, wherein the stored power is retained by one or more of a flywheel, a hydraulic reservoir, a battery, and a compressed air tank.

7. The engine assembly of claim 5 or 6, wherein power is provided by another engine or an auxiliary power unit.

8. The engine assembly of any preceding claim, wherein the engine assembly further comprises an electric propulsion engine (111) operable in series or parallel with the combustion turbine engine (10; 110).

9. The engine assembly of claim 8, wherein the electric propulsion engine (111) is configured to operate at least periodically as the idle assist motor, operating in an idle suppression mode during idle or taxi mode.

10. The engine assembly of any preceding claim, wherein the first controller (46; 146) and the second controller (52; 152) are integrated into a single controller unit.

11. A method of operating an engine assembly, the method comprising:
operating a combustion turbine engine (10; 110) comprising a first compressor spool, a first turbine spool, a first shaft (44; 144) connecting the first compressor spool and the first turbine spool, and a combustor (16; 116) disposed in a working gas flow path between the first compressor spool and the first turbine spool, and **characterized by** operation of the combustion turbine engine (10; 110) being performed in part according to a compressor surge map, in a range extending between a first suppressed idle mode, a second base idle mode, and a maximum takeoff power rating mode;
in at least the first suppressed idle mode, supplementing the combustion turbine engine (10; 110) with an idle speed suppressor (36), including at least one idle assist motor (48) connected to the first shaft (44; 144) of the combustion turbine engine (10; 110); and
operating the idle speed suppressor (36) relative to the combustion turbine engine (10; 110) during times of minimum power demand, such that operating the idle speed suppressor (36) increases a compressor speed in the first suppressed idle mode relative to a compressor speed in the second base idle mode without increasing engine thrust.

12. The method of claim 11, further comprising controlling fuel flow to the engine (10; 110) specific to the idle suppression mode and the surge map while maintaining stability of the engine (10; 110) during at least one of the first suppressed idle mode and an acceleration mode.

13. The method of claim 11 or 12, further comprising operating at least one of the starter and the starter / generator in an idle speed suppression mode while the engine (10; 110) is running, in order to increase a speed of at least the first compressor spool during at least the first suppressed idle mode, reducing the load on the first turbine spool driving the first compressor spool during at least the first suppressed idle mode.

14. The method of claim 11, 12 or 13, further comprising reducing a corresponding turbine output speed or operating temperature.

15. The method of any of claims 11 to 14, further comprising reducing a turbine exhaust temperature in the idle suppression mode relative to the base idle mode.

## Patentansprüche

1. Triebwerksanordnung, umfassend:
ein Verbrennungsturbinentriebwerk (10; 110), umfassend eine erste Kompressorspule, eine erste Turbinenspule, eine erste Welle (44; 144), die die erste Kompressorspule und die erste Turbinenspule verbindet, und eine Brennkammer (16; 116), die in einem Arbeitsgasströmungspfad zwischen der ersten Kompressorspule und der ersten Turbinenspule angeordnet ist; **gekennzeichnet durch**
eine erste Steuerung (46; 146), die mit einem Pumpkennfeld programmiert und dazu konfiguriert ist, das Verbrennungsturbinentriebwerk (10; 110) in einem Bereich zu betreiben, der sich zwischen einem ersten unterdrückten Leerlaufmodus, einem zweiten Basisleerlaufmodus und einem Maximalstartnennleistungsmodus erstreckt;
eine Leerlaufdrehzahldrossel (36), die mindestens einen Leerlaufunterstützungsmotor (48) enthält, der mit der ersten Welle (44; 144) des Verbrennungsturbinentriebwerks (10; 110) verbunden ist; und
eine zweite Steuerung (52; 152), die dazu konfiguriert ist, den Betrieb der Leerlaufdrehzahldrossel (36) relativ zu dem Verbrennungsturbinentriebwerk (10; 110) während Zeiten minimaler Leistungsanforderung zu verwalten, so dass der Betrieb des Leerlaufdrehzahlunterdrückers (36) eine Kompressordrehzahl im ersten unterdrückten Leerlaufmodus relativ zu einer Kompressordrehzahl im zweiten Basisleerlaufmodus erhöht.

2. Triebwerksanordnung nach Anspruch 1, wobei mindestens eine der ersten Steuerung (46; 146) und der zweiten Steuerung (52; 152) dazu konfiguriert ist, den Kraftstofffluss zum Triebwerk (10; 110) spezifisch für den Leerlaufdrosselmodus und das Pumpkennfeld zu steuern, während die Stabilität des Triebwerks (10; 110) während dem Leerlauf und/oder der Beschleunigung beibehalten wird.

3. Triebwerksanordnung nach Anspruch 1 oder 2, wobei der Leerlaufunterstützungsmotor (48) mindestens eines umfasst von: einem Anlasser/Generator, einem Startermotor und einem dedizierten Leerlaufunterstützungsmotor.

4. Triebwerksanordnung nach Anspruch 3, wobei der Anlasser und/oder der Anlasser/Generator in einem Leerlaufdrehzahldrosselmodus betreibbar ist, während das Triebwerk (10; 110) läuft, um eine Drehzahl der ersten Kompressorspule während des Leerlauf- oder Rollmodus zu erhöhen, wodurch die Last auf der ersten Turbinenspule verringert wird, die die erste Kompressorspule während des Leerlauf- oder Rollmodus antreibt.

5. Triebwerksanordnung nach einem der vorhergehenden Ansprüche, wobei der Leerlaufunterstützungsmotor (48) zumindest teilweise mit gespeicherter Energie arbeitet, die getrennt von einer Turbine (18; 118) des Verbrennungsturbinentriebwerks (10; 110) ist.

6. Triebwerksanordnung nach Anspruch 5, wobei die gespeicherte Energie durch ein Schwungrad, einen Hydraulikbehälter, eine Batterie und/oder einen Drucklufttank gehalten wird.

7. Triebwerksanordnung nach Anspruch 5 oder 6, wobei Leistung von einem anderen Triebwerk oder einer Hilfsleistungseinheit bereitgestellt wird.

8. Triebwerksanordnung nach einem der vorhergehenden Ansprüche, wobei die Triebwerksanordnung ferner einen Elektroantriebsmotor (111) umfasst, der in Reihe oder parallel mit dem Verbrennungsturbinentriebwerk (10; 110) betreibbar ist.

9. Triebwerksanordnung nach Anspruch 8, wobei der Elektroantriebsmotor (111) so konfiguriert ist, dass er zumindest periodisch als der Leerlaufunterstützungsmotor arbeitet, der während des Leerlauf- oder Rollmodus in einem Leerlaufdrosselmodus arbeitet.

10. Triebwerksanordnung nach einem der vorhergehenden Ansprüche, wobei die erste Steuerung (46; 146) und die zweite Steuerung (52; 152) in einer einzigen Steuerungseinheit integriert sind.

11. Verfahren zum Betreiben einer Triebwerksanordnung, wobei das Verfahren Folgendes umfasst:
Betreiben eines Verbrennungsturbinentriebwerks (10; 110), das eine erste Kompressorspule, eine erste Turbinenspule, eine erste Welle (44; 144), die die erste Kompressorspule und die erste Turbinenspule verbindet, und eine Brennkammer (16; 116), die in einem Arbeitsgasströmungspfad zwischen der ersten Kompressorspule und der ersten Turbinenspule angeordnet ist, umfasst, und **dadurch gekennzeichnet, dass** der Betrieb des Verbrennungsturbinentriebwerks (10; 110) teilweise gemäß einem Kompressorpumpkennfeld in einem Bereich durchgeführt wird, der sich zwischen einem ersten unterdrückten Leerlaufmodus, einem zweiten Basisleerlaufmodus und einem Maximalstartleistungsmodus erstreckt;
in mindestens dem ersten unterdrückten Leerlaufmodus, Ergänzen des Verbrennungsturbinentriebwerks (10; 110) mit einer Leerlaufdrehzahldrossel (36), die mindestens einen Leerlaufunterstützungsmotor (48) enthält, der mit der ersten Welle (44; 144) des Verbrennungsturbinentriebwerks (10; 110) verbunden ist; und
Betreiben des Leerlaufdrehzahlunterdrückers (36) relativ zu dem Verbrennungsturbinentriebwerk (10; 110) während Zeiten minimaler Leistungsanforderung, so dass der Betrieb der Leerlaufdrehzahldrossel (36) eine Kompressordrehzahl im ersten unterdrückten Leerlaufmodus relativ zu einer Kompressordrehzahl im zweiten Basisleerlaufmodus erhöht, ohne den Triebwerkschub zu erhöhen.

12. Verfahren nach Anspruch 11, das ferner das Steuern des Kraftstoffflusses zum Triebwerk (10; 110) spezifisch für den Leerlaufdrosselmodus und das Pumpkennfeld umfasst, während die Stabilität des Triebwerks (10; 110) während mindestens einem des ersten unterdrückten Leerlaufmodus und eines Beschleunigungsmodus aufrechterhalten wird.

13. Verfahren nach Anspruch 11 oder 12, ferner umfassend das Betreiben mindestens eines von dem Anlasser und dem Anlasser/Generator in einem Leerlaufdrehzahldrosselmodus, während das Triebwerk (10; 110) läuft, um eine Drehzahl zumindest der ersten Kompressorspule während zumindest des ersten unterdrückten Leerlaufmodus zu erhöhen, wodurch die Last auf die erste Turbinenspule reduziert wird, die die erste Kompressorspule zumindest während des ersten unterdrückten Leerlaufmodus antreibt.

14. Verfahren nach Anspruch 11, 12 oder 13, ferner umfassend das Reduzieren einer entsprechenden Turbinenausgangsdrehzahl oder Betriebstemperatur.

15. Verfahren nach einem der Ansprüche 11 bis 14, ferner umfassend das Verringern einer Turbinenabgastemperatur in dem Leerlaufdrosselmodus relativ zu dem Basisleerlaufmodus.

## Revendications

1. Ensemble moteur comprenant :
un moteur à turbine à combustion (10 ; 110) comprenant un premier corps de compresseur, un premier corps de turbine, un premier arbre (44 ; 144) connectant le premier corps de compresseur et le premier corps de turbine, et une chambre de combustion (16 ; 116) disposée dans un trajet d'écoulement de gaz de travail entre le premier corps de compresseur et le premier corps de turbine ; **caractérisé par**
un premier dispositif de commande (46 ; 146) programmé avec une carte de surtension et configuré pour faire fonctionner le moteur à turbine à combustion (10 ; 110) dans une plage s'étendant entre un premier mode de ralenti supprimé, un second mode de ralenti de base et un mode de puissance nominale maximale au décollage ;
un suppresseur de régime de ralenti (36) comportant au moins un moteur d'assistance au ralenti (48) connecté au premier arbre (44 ; 144) du moteur à turbine à combustion (10 ; 110) ; et
un second dispositif de commande (52 ; 152) configuré pour gérer le fonctionnement du suppresseur de régime de ralenti (36) par rapport au moteur à turbine à combustion (10 ; 110) pendant des périodes de demande de puissance minimale, de sorte que le fonctionnement du suppresseur de régime de ralenti (36) augmente une vitesse de compresseur dans le premier mode de ralenti supprimé par rapport à une vitesse de compresseur dans le second mode de ralenti de base.

2. Ensemble moteur selon la revendication 1, dans lequel au moins l'un du premier dispositif de commande (46 ; 146) et du second dispositif de commande (52 ; 152) est configuré pour commander un débit de carburant vers le moteur (10 ; 110) spécifique au mode de suppression de ralenti et à la carte de surtension tout en maintenant la stabilité du moteur (10 ; 110) pendant au moins l'un parmi le ralenti et l'accélération.

3. Ensemble moteur selon la revendication 1 ou 2, dans lequel le moteur d'assistance au ralenti (48) comprend au moins l'un parmi : un démarreur/générateur, un moteur de démarrage et un moteur d'assistance au ralenti dédié.

4. Ensemble moteur selon la revendication 3, dans lequel au moins l'un parmi le démarreur et le démarreur/générateur peut fonctionner dans un mode de suppression de régime de ralenti pendant que le moteur (10 ; 110) est en marche, afin d'augmenter une vitesse du premier corps de compresseur pendant le mode de ralenti ou de roulage, réduisant la charge sur le premier corps de turbine entraînant le premier corps de compresseur pendant le mode de ralenti ou de roulage.

5. Ensemble moteur selon une quelconque revendication précédente, dans lequel le moteur d'assistance au ralenti (48) fonctionne au moins partiellement sur la puissance stockée distincte d'une turbine (18 ; 118) du moteur à turbine à combustion (10 ; 110).

6. Ensemble moteur selon la revendication 5, dans lequel la puissance stockée est retenue par un ou plusieurs éléments parmi un volant, un réservoir hydraulique, une batterie et un réservoir d'air comprimé.

7. Ensemble moteur selon la revendication 5 ou 6, dans lequel la puissance est fournie par un autre moteur ou un groupe auxiliaire de puissance.

8. Ensemble moteur selon une quelconque revendication précédente, dans lequel l'ensemble moteur comprend en outre un moteur à propulsion électrique (111) pouvant fonctionner en série ou en parallèle avec le moteur à turbine à combustion (10 ; 110).

9. Ensemble moteur selon la revendication 8, dans lequel le moteur à propulsion électrique (111) est configuré pour fonctionner au moins périodiquement en tant que moteur d'assistance au ralenti, fonctionnant dans un mode de suppression de ralenti pendant le mode de ralenti ou de roulage.

10. Ensemble moteur selon une quelconque revendication précédente, dans lequel le premier dispositif de commande (46 ; 146) et le second dispositif de commande (52 ; 152) sont intégrés dans une seule unité de dispositif de commande.

11. Procédé de fonctionnement d'un ensemble moteur, le procédé comprenant :
le fonctionnement d'un moteur à turbine à combustion (10 ; 110) comprenant un premier corps de compresseur, un premier corps de turbine, un premier arbre (44 ; 144) connectant le premier corps de compresseur et le premier corps de turbine, et une chambre de combustion (16 ; 116) disposée dans un trajet d'écoulement de gaz de travail entre le premier corps de compresseur et le premier corps de turbine, et **caractérisé par** le fonctionnement du moteur à turbine à combustion (10 ; 110) étant effectué en partie selon une carte de surtension de compresseur, dans une plage s'étendant entre un premier mode de ralenti supprimé, un second mode de ralenti de base et un mode de puissance nominale maximale au décollage ;
dans au moins le premier mode de ralenti supprimé, l'ajout au moteur à turbine à combustion (10 ; 110) d'un suppresseur de régime de ralenti (36), comportant au moins un moteur d'assistance au ralenti (48) connecté au premier arbre (44 ; 144) du moteur à turbine à combustion (10 ; 110) ; et
le fonctionnement du suppresseur de régime de ralenti (36) par rapport au moteur à turbine à combustion (10 ; 110) pendant des périodes de demande de puissance minimale, de sorte que le fonctionnement du suppresseur de régime de ralenti (36) augmente une vitesse de compresseur dans le premier mode de ralenti supprimé par rapport à une vitesse de compresseur dans le second mode de ralenti de base sans augmenter la poussée du moteur.

12. Procédé selon la revendication 11, comprenant en outre la commande d'un débit de carburant vers le moteur (10 ; 110) spécifique au mode de suppression de ralenti et à la carte de surtension tout en maintenant la stabilité du moteur (10 ; 110) pendant au moins l'un parmi le premier mode de ralenti supprimé et un mode d'accélération.

13. Procédé selon la revendication 11 ou 12, comprenant en outre le fonctionnement d'au moins l'un parmi le démarreur et le démarreur/générateur dans un mode de suppression de régime de ralenti pendant que le moteur (10 ; 110) est en marche, afin d'augmenter une vitesse d'au moins le premier corps de compresseur pendant au moins le premier mode de ralenti supprimé, réduisant la charge sur le premier corps de turbine entraînant le premier corps de compresseur pendant au moins le premier mode de ralenti supprimé.

14. Procédé selon la revendication 11, 12 ou 13, comprenant en outre la réduction d'une vitesse de sortie de turbine ou d'une température de fonctionnement correspondantes.

15. Procédé selon l'une quelconque des revendications 11 à 14, comprenant en outre la réduction d'une température d'échappement de turbine dans le mode de suppression de ralenti par rapport au mode de ralenti de base.
